# EUROPÄISCHE PATENTSCHRIFT

(11) **EP 1 750 518 B1**
(45) Veröffentlichungstag und Bekanntmachung des Hinweises auf die Patenterteilung: **24.12.2008**
(21) Anmeldenummer: 05745358.1
(22) Anmeldetag: 06.05.2005
(51) Int. Cl.: A22C 13/00, B65D 65/42

(54) **NAHRUNGSMITTELHÜLLE AUF BASIS VON REGENERIERTER CELLULOSE MIT VOLLSYNTHETISCHER FASERVERSTÄRKUNG**
FOODSTUFF CASING BASED ON REGENERATED CELLULOSE WITH A FULLY SYNTHETIC FIBER REINFORCEMENT
ENVELOPPE POUR PRODUITS ALIMENTAIRES, A BASE DE CELLULOSE REGENEREE ET DE FIBRES SYNTHETIQUES

(30) Priorität: 10.05.2004 DE 102004022975
(43) Veröffentlichungstag der Anmeldung: 14.02.2007
(73) Patentinhaber: Kalle GmbH, 65203 Wiesbaden (DE)
(72) Erfinder: RIESER, Theresia, 55234 Eppelsheim (DE); LUTZ, Walter, 55257 Budenheim (DE)
(74) Vertreter: Plate, Jürgen
(86) Internationale Anmeldenummer: PCT/EP2005/004919
(87) Internationale Veröffentlichungsnummer: WO 2005/110103

(56) Entgegenhaltungen:
- EP-A- 0 724 834
- WO-A-00/40092
- DE-C- 609 129
- GB-A- 1 042 182
- US-A- 4 248 900

## Beschreibung

Die Erfindung betrifft eine Nahrungsmittelhülle auf Basis von regenerierter Cellulose mit einer Faserverstärkung. Sie betrifft daneben die Verwendung der Nahrungsmittelhülle als künstliche Wursthülle.

Kunstdärme auf Basis von regenerierter Cellulose, die mit einem naßfesten Faserpapier verstärkt sind, gehören seit langem zum Stand der Technik (s. G. Effenberger, Wursthüllen - Kunstdarm, Holzmann Buchverlag, Bad Wörishofen, 2. Aufl. [1991], S. 23/24). Bei der Herstellung dieser auch als Faserdärme bezeichneten Hüllen wird allgemein ein Vlies aus cellulosischen Fasern verwendet, insbesondere ein Hanffaservlies. Das Faservlies wird dann in Streifen geschnitten, wobei die Breite der Streifen dem Kaliber der herzustellenden Faserdärme entspricht. In einer Faserdarmspinnmaschine werden die Streifen jeweils zu einem Schlauch mit überlappender Längsnaht geformt, der dann durch eine Ringdüse mit Ringschlitz geführt wird. Über die Düse wird der Faservliesschlauch von außen, von innen oder von beiden Seiten mit Viskose beaufschlagt. Die Viskose durchdringt dabei das Faservlies. Der außen-, innen- oder doppelviskosierte Schlauch wird dann durch saure Fällbäder geführt, in denen die Cellulose aus der Viskose regeneriert wird. Anschließend durchläuft der Schlauch noch Waschbäder, gegebenenfalls auch Weichmacherbäder, und wird schließlich getrocknet. In der fertigen schlauchförmigen Hülle sind die überlappenden Längskanten des Faservlieses durch die regenerierte Cellulose fest miteinander verbunden. Auch ein außenviskosierter Schlauch weist innen eine im wesentlichen geschlossene Schicht aus regenerierter Cellulose auf. Faserdärme zeigen, im Vergleich zu nicht faserverstärkten Cellulosehydratdärmen, in jedem Fall eine deutlich verbesserte Kaliberkonstanz und auch eine höhere Reißfestigkeit.

Das Vlies aus cellulosischen Fasern wird üblicherweise vorher naßfest und alkalibeständig gemacht durch Behandeln mit geeigneten Bindemitteln. Dabei werden vor allem verdünnte Viskoselösungen (die etwa 3 bis 5 Gew.-% Cellulose enthalten) eingesetzt. Die aus der Viskose regenerierte Cellulose bindet dann die Fasern des Vlieses. Viskose- oder Cellulosebinder erfordern eine Regenerierung bzw. Fällung der Cellulose, was einen erheblichen technischen Aufwand mit sich bringt. Die erforderliche Naßfestigkeit und Alkalibeständigkeit läßt sich auch erreichen durch Behandeln mit Celluloseacetatlösung oder mit Harzbindern auf Polyamid-Epichlorhydrin- oder Polyamid-Polyamin-Epichlorhydrin-Basis. Die Menge an Bindemittel muß in jedem Fall genau abgestimmt sein. Schwankung in der Menge der Binder können sich sehr stark auf die Stabilität der Nahrungsmittelhüllen auswirken.

Zu einem Schlauch geformte Faserverstärkungen aus cellulosischen Fasern, die mit Polyamid-Epichlorhydrin-Bindern, Polyamid-Polyamin-Epichlorhydrin-Bindern oder anderen Bindern auf der Basis von sekundären oder tertiären Aminen behandelt wurden, haben einen wesentlichen Nachteil, wenn die spinnbare Cellulose- oder Viskoselösung nur auf deren Außenseite aufgetragen wird. Denn dann wird das Vlies häufig nicht mehr vollständig von der Viskose- oder Celluloselösung durchdrungen, so daß es auf der Innenseite nicht vollständig von einer Schicht aus regenerierter Cellulose bedeckt ist. Einzelne, nicht bedeckte Fasern genügen jedoch, um eine relativ starke Haftung der Hülle am Füllgut zu bewirken. Dies ist bei vielen Anwendungen unerwünscht. Denn in der Praxis wird vielfach gefordert, daß sich die Hülle leicht vom Füllgut abschälen lassen soll. Das gilt beispielsweise bei der Pizzasalamiherstellung. Es bedeutet, daß bei solchen außenviskosierten Hüllen eine zusätzliche Behandlung mit einer haftungsmindernden Imprägnierung auf der Innenseite notwendig ist, was die Produktionskosten wiederum erhöht.

Bekannt sind auch Faserdärme, die nach dem Aminoxid-Verfahren hergestellt sind. In diesem Verfahren wird anstelle der Viskoselösung eine Lösung von Cellulose in einem - in der Regel wasserhaltigen - tertiären Aminoxid verwendet. Als besonders geeignetes Lösungsmittel hat sich dabei N-Methyl-morpholin-N-oxid, insbesondere das Monohydrat davon, erwiesen. In dem Aminoxid ist die Cellulose rein physikalisch gelöst, ohne daß dabei eine chemische Derivatisierung stattfindet wie im Viskoseverfahren. Das Beschichten des zu einem Schlauch geformten Faservliesmaterials erfolgt dann wiederum mit Hilfe von Ringschlitzdüsen, im wesentlichen wie im Viskoseverfahren. Anstelle der Regenerierung in schwefelsauren Bädern findet jedoch eine Fällung der Cellulose in einem - häufig gekühlten - Bad aus einem verdünnten wäßrigen Aminoxid statt.

Neben dem häufig verwendeten Hanffaserpapier sind auch Faservliese aus einem Gemisch von Cellulose- und Kunstfasern als Verstärkung für schlauchförmige Nahrungsmittelhüllen auf Basis von regenerierter Cellulose bekannt (WO 00/40092). Diese Faservliese sollen den Vorteil haben, daß die Dehnung in Querrichtung bei Kontakt mit Feuchtigkeit über die Breite der Vliesbahn gleichmäßiger ist, d.h. das Vlies dehnt sich an den Rändern nicht mehr wesentlich stärker aus als in der Mitte.

Neben der aus GB 1 402 182 A bekannten Hülle gemäß dem oberbegriff des Auspruchs 1, sind schließlich auch schlauchförmige Nahrungsmittelhüllen auf Basis von Cellulosehydrat bekannt, die ein Faserpapiervlies aus cellulosischen Fasern als Verstärkung aufweisen, das kombiniert ist mit einem Textilmaterial, beispielsweise einem Gewebe oder Gewirke aus Wolle, Baumwolle, Cellulose, Polyamid, Polyester, Polyacrylnitril oder Polypropylen (DE-A 38 26 616 = US 5 043 194). Das Gewebe oder Gewirke bildet beispielsweise zusammen mit dem Faserpapiervlies ein Laminat. Es ist, wie bei den bereits beschriebenen Faserdärmen, praktisch vollständig in regenerierte Cellulose eingebettet. In einer weiteren Ausführungsform bildet das Textilmaterial allein die Verstärkung. In diesem Fall besteht das Textilmaterial aus cellulosischen Fasern (insbesondere Baumwollfasern), gegebenenfalls auch aus Gemischen von cellulosischen Fasern mit synthetischen Fasern (wie Polyamid- oder Polyesterfasern). Allgemein wird die Cellulosehydratschicht auf der Außenseite der Hüllen so dünn gehalten, daß das textile Verstärkungsmaterial noch gut sichtbar ist. Die Hüllen wirken dann besonders hochwertig. Eingesetzt werden sie insbesondere für Dauerwurstsorten, wie Salami.

Schmelzgesponnene, synthetische Vliese, deren Verfestigung üblicherweise durch thermische oder chemische Einwirkung erfolgt, haben allgemein eine hohe mechanische Festigkeit, jedoch eine geringe Porosität. Das heißt, sie werden von Viskose- oder Cellulose-Lösungen nur schwer durchdrungen. Sie wurden daher als Faserverstärkung in Nahrungsmittelhüllen auf Basis von Cellulose als ungeeignet angesehen.

Es bestand daher die Aufgabe, die beschriebenen Nachteile der bekannten faserverstärkten Nahrungsmittelhüllen auf Basis von regenerierter Cellulose zu beheben. Insbesondere waren sie so zu verbessern, daß sie von Cellulasen, d.h. von cellulytisch wirkenden Enzymen wie sie insbesondere bei (Edel-)Schimmel vorkommen, weniger stark angegriffen werden. Ferner sollen die schlauchförmigen Hüllen über ihre gesamte Länge einen sehr gleichmäßigen Durchmesser haben, d.h. die Hüllen sollen eine hohe Kaliberkonstanz aufweisen.

Gelöst wurden die Aufgaben mit einem vliesartigen Flächengebilde aus rein synthetischem Fasermaterial, das als innere Verstärkung der Nahrungsmittelhülle dient.

Gegenstand der vorliegenden Erfindung ist demgemäß eine Nahrungsmittelhülle auf Basis von regenerierter Cellulose mit einer innenliegenden Faserverstärkung aus rein synthetischen Fasern, wobei die Faserventärkung ein vlies gemäss des kennzeichnenden Teils des Anspruchs 1 ist.

Die synthetischen Fasern lassen sich aus Kunststoffen herstellen, die ihrerseits durch Polymerisation, Polykondensation oder Polyaddition erhältlich sind. Die Kunststoffe werden beispielsweise durch Lösen oder Schmelzen in eine spinnbare Form gebracht und mit Hilfe von entsprechenden Düsen versponnen. Naßgesponnene Fasern werden in einem Fällbad, trockengesponnene mit Luft verfestigt. Die synthetischen Fasern können beispielsweise aus thermoplastischen Kunststoffen bestehen, z. B. aus Polyolefinen (speziell Polyethylen oder Polypropylen) oder Copolymeren mit Olefin-Einheiten, Polyacrylaten, Copolymeren mit Acrylnitril-Einheiten, Polyestern (speziell Polyethylenterephthalat oder Polybutylenterephthalat) oder Copolyestern und/oder aliphatischen oder (teil-)aromatischen Polyamiden oder Copolyamiden (speziell Polyamid 4, Polyamid 6, Polyamid 7, Polyamid 11, Polyamid 12, Polyamid 4,6, Polyamid 6,6, Polyamid 6,10, oder Polyamid 6I/6T). Polyacrylatfasern (speziell Fasern aus Acrylnitril oder Acrylnitril-Copolymeren, die vorzugsweise Vinylacetat und/oder Vinylpyrrolidon als Comonomer-Einheiten aufweisen) werden üblicherweise aus einer Polymerlösung ersponnen und durch Fällen in einem Fällbad verfestigt. Unter "Copolymer", "Copolyamid" usw. sollen dabei Polymere verstanden werden, die zwei oder mehr verschiedene Monomer-Einheiten aufweisen.

Die Polymerfasern können auch sogenannte Bi- oder Multikomponentenfasern sein (s. Franz Fourné, Synthetische Fasern, Carl Hanser Verlag [1995], S. 539-549). Bei der Herstellung dieser Fasern werden zwei oder mehr verschiedene Polymere miteinander auf die gleiche Weise versponnen. Auf diese Weise lassen sich beispielsweise Fasern mit einem Polyester- und einem Polyamid-Anteil erzeugen. Zu den Bi- oder Multikomponentenfasern zählen insbesondere Seite-an-Seite-Typen, Kern-Mantel-Typen und Matrix-Fibrillen-Typen. Verschiedene Bi-oder Multikomponentenfasern können miteinander oder auch mit Monokomponentenfasern gemischt sein.

Die synthetischen Fasern bilden ein Vlies . Unter Vliesen sollen im Zusammenhang mit der vorliegenden Erfindung Flächengebilde verstanden werden, die nicht durch die klassische Methode der Gewebebindung mit Kette und Schuß oder durch Maschenbildung, sondern durch Verschlingung und/oder kohäsive und/oder adhäsive Verbindung von Fasern hergestellt werden. Vliese können aus Spinnfasern oder Filamenten (sogenannten Endlosfasern) hergestellt werden. Die Fasern können in dem Vlies eine Vorzugsrichtung aufweisen (orientierte Vliese) oder ungerichtet sein (Wirrvliese). Die Vliese können mechanisch durch Vernadeln, Vermaschen oder durch Verwirbeln mit Hilfe von scharfen Wasserstrahlen, dem sogenannten "Spunlacing" (Wasserstrahlverfestigung oder"Hydroentanglement") verfestigt werden. Die Vliese können auch Fasern unterschiedlicher chemischer Natur enthalten.

Eine adhäsive Verfestigung entsteht durch chemisches Vernetzen der Fasern mit Bindemitteln oder durch Schmelzen bzw. Auflösen von sogenannten Bindefasern, die dem Vlies bei der Herstellung beigemischt werden. Bekannt ist auch die Verfestigung durch Ultraschall. Bei der kohäsiven Vernetzung werden die Faseroberflächen durch geeignete Chemikalien angelöst u. durch Druck verbunden oder bei erhöhter Temperatur verschweißt. Spinnvliese entstehen durch Erspinnen, anschließendes Ablegen, Aufblasen oder Aufschwemmen von Fasern, dem sogenannten "Spunbonding".

Spunbonding und Spunlacing lassen sich auch kombinieren. Auf diese Weise sind Mehrschicht- und/oder Mehrphasenvliese erhältlich. Diese können verschiedene Fasermaterialien und/oder Mischungen von verschiedenen Fasern innerhalb einer Schicht oder Phase aufweisen.

Zweischichtige oder zweiphasige Vliese lassen sich auch erhalten, wenn ein schmelzegesponnenes Vlies vorgelegt und darauf ein weiteres Vlies durch Schmelzspinnen erzeugt wird. Auf diese Weise lassen sich auch Vliese mit noch mehr Schichten und/oder Phasen herstellen. Ebenso gut können auch naß- oder trocken gelegte Fasern auf ein schmelzegesponnenes Vlies aus synthetischen Fasern aufgebracht werden, oder umgekehrt. Schließlich können auch Vliese unterschiedlicher chemischer Art nachträglich adhäsiv oder kohäsiv miteinander verknüpft werden. Die mehrschichtigen bzw. -phasigen Vliese weisen allgemein besonders vorteilhafte Eigenschaften auf, insbesondere eine hohe Porosität bei gleichzeitig hoher Festigkeit und Flexibilität. In den mehrschichtigen oder mehrphasigen Vliesen gibt es Bereiche, in denen ein Fasertyp im Vergleich zu mindestens einem weiteren Fasertyp bevorzugt vorkommt.

Außerdem können den synthetischen Vliesen chemische Bindemittel beigemischt werden. Das sind beispielsweise Bindemittel, wie Harzbinder auf Polyamid-Epichlorhydrin-Basis, Polyvinylamine, Polyalkylenimine oder Latexbinder.

Besonders geeignet für die Herstellung der erfindungsgemäßen Nahrungsmittelhüllen sind vollsynthetische Vliese, die durch "Spunlacing", und/oder eine thermische Nachbehandlung verfestigt werden. Zusätzlich ist die Anwendung eines Binders auf Latex-Basis möglich, wobei der Binder die Durchdringbarkeit des Vlieses mit spinnbaren Viskose- oder Celluloselösungen nicht beeinträchtigen darf.

Geeignete Binder sind solche auf der Basis von Polystyrolen, carboxylierten Polystyrolen, Polyvinylalkoholen oder Polyacrylaten, Harze auf Polyurethanbasis, Copolymersiate auf der Basis von Polystyrol und Acrylsäureestern, Copolymersiate auf der Basis von Butadien und Styrol und/oder Acrylnitril, Harze auf Epoxidbasis oder Harnstoff-Formaldehyd-Kondensationsprodukte und andere dem Fachman bekannte Produkte. Bei hydrophilen Bindersystemen werden häufig auch ionische, nichtionische, oder zwitterionische oberflächenwirksame Komponenten, z. B. Tenside, dem Binder zugesetzt oder die synthetischen Flächengebilde werden mit oberflächenwirksamen Substanzen vor dem Binderauftrag behandelt. Die oberflächenwirksamen Komponenten bewirken eine verbesserte Benetzung der Filamente oder Fasern mit dem Binder.

Die Binder können während des Herstellungsprozesses mit Hilfe einer sogenannten "size press" aufgetragen werden, möglich ist aber auch der Binderauftrag durch Sprühen, Tauchen oder Walzenantrag.

Überraschenderweise hat sich gezeigt, daß das "Spunlacing"-Verfahren und/oder eine schonende thermische Nachbehandlung von Vliesen, denen z. B. Bindefasern mit einem niedrigeren Schmelzpunkt beigefügt sind, zu Vliesen mit ausreichender Stabilität und Porosität führen, so daß eine gute Durchdringung des synthetischen Flächengebildes mit Viskose- oder Celluloselösungen möglich ist.

Jenseits der erfindungsgemäßen Nahrungsmittelhülle auf Vlres-Basis sind auch Wirk- oder Strickwaren oder Gewebe aus synthetischen Fasern als flächenförmige Faserverstärkung verwendbar. Sie bestehen im alle von Wirk- oder Strickwaren aus maschenförmig verbundenen Fadenschleifen. Gewebe werden aus rechtwinklig gekreuzten Fäden gebildet.

Vliese wie auch Gewebe, Gewirke oder Gestricke der oben genannten Art sind allgemein bereits ausreichend naßfest und alkalibeständig. Um die Benetzbarkeit der flächenförmigen Faserverstärkung mit Viskose- oder Celluloselösungen noch weiter zu verbessern, kann ihre Oberfläche zusätzlich modifiziert werden, beispielsweise mit Hilfe energiereicher Strahlung. Das kann durch Behandlung mit Coronaentladung, Plasma oder Elektronenbestrahlung erreicht werden oder durch andere, dem Fachmann bekannte Verfahren.

Eine Verbesserung der Benetzbarkeit kann auch durch chemische Modifizierung der Flächengebilde erfolgen. Beispielsweise lassen sich hierfür die bereits genannten Binder einsetzen, die die Hydrophilie der Fasern oder Filamente aus synthetischen Polymeren erhöhen. Auch eine selbstvernetzende Acrylat-Emulsion auf Wasserbasis (erhältlich beispielsweise von der Firma Röhm & Haas unter der Bezeichnung ®Rhoplex NW 2744 F) ist verwendbar.

Das Flächengewicht der trockenen Vliese beträgt 10 bis 50 g/m², 15 bis 30 g/ m², vorzugsweise 17 bis 26 g/m².

Das Flächengewicht der Flächengebilde auf der Basis von Geweben, Wirk- oder Strickwaren, aufgebaut aus Fasern gleicher oder unterschiedlicher chemischer Natur, liegt im Bereich von 10 bis 400 g/m², vorzugsweise im Bereich von 25 bis 110 g/m².

Die Zeit, in der die Faserverstärkung aus synthetischen Fasern von der Viskose-oder Cellulose-Spinnlösung durchdrungen wird (Vikosedurchdringungszeit) beträgt allgemein 5 bis 120 s, bevorzugt 10 bis 80 s, besonders bevorzugt 20 bis 40 s, abhängig auch von der Viskosität der Spinnlösung.

Die einfach oder beidseitig viskosierten vollsynthetischen Flächengebilde bzw. die Nahrungsmittelhüllen aus Cellulose können nach dem Fachmann bekannten Verfahren mit zusätzlichen Veredelungskomponenten wie bereits beschrieben ausgerüstet sein.

Eine Faserverstärkung aus synthetischen Fasern bringt mehrere Vorteile mit sich: Synthesefasern sind billig und in gleichbleibender Qualität von zahlreichen Anbietern erhältlich. Sie werden darüber hinaus nicht von cellulytisch wirkenden Enzymen (Cellulasen) angegriffen. Hüllen auf Basis von Cellulosehydrat mit einer Faserverstärkung aus cellulosischen Fasern können dagegen durch die Einwirkung von Cellulasen völlig destabilisiert werden, so daß das Füllgut verdirbt. Verstärkungen aus synthetischen Fasern besitzen zudem eine hohe mechanische Stabilität. Die meisten sind auch beständig gegen Alkali. Das trifft beispielsweise auf Polyolefine zu.

Die erfindungsgemäße Nahrungsmittelhülle besitzt zudem eine hohe mechanische Stabilität und sowie eine hohe Kaliberstabilität. Die Kaliberstabilität wird im wesentlichen von den Quelleigenschaften der flächenförmigen Faserverstärkung in Querrichtung (d.h. in der Richtung senkrecht zur Maschinenrichtung) bestimmt. Sie ist für die Verwendbarkeit der Wursthülle in der industriellen Wurstfertigung von entscheidender Bedeutung. Insbesondere bei der Pizzasalamiherstellung wird häufig von der Industrie eine Schwankung der Wurstdurchmesser von weniger als 1 mm gefordert. Die Quelleigenschaften der rein synthetischen Flächengebilde in Wasser sind in der Regel deutlich geringer als bei Faserpapier auf Cellulosebasis. Daher bedeutet eine Verstärkung der Nahrungsmittelhülle mit rein synthetischen Flächengebilden einen deutlichen Zugewinn für die Qualität derfertigen Nahrungsmittelhülle im Bereich der Dimensionsschwankungen der fertigen Hülle und damit auch eine Qualitätsverbesserung beim Nahrungsmittelendprodukt.

Herstellen läßt sich die erfindungsgemäße Nahrungsmittelhülle nach Verfahren, die dem Fachmann prinzipiell bekannt sind. Diese Verfahren unterscheiden sich im wesentlichen in der Art und der Herstellung der spinnbaren Celluloselösungen. Bei dem sehr weit verbreiteten Viskoseverfahren wird die Cellulose nach vorheriger Aufbereitung mit Hilfe von Natronlauge und Schwefelkohlenstoff in alkalilösliches Cellulosexanthogenat umgewandelt. Mit der dabei entstehenden Viskoselösung werden die zu einem Schlauch geformten flächenförmigen Faserverstärkungen beaufschlagt. Das Cellulosexanthogenat wird anschließend unter Einwirkung von Schwefelsäure in sogenannte Regeneratcellulose konvertiert ("regeneriert"). Die Reinigung der Schläuche von Nebenprodukten und Säureresten erfolgt in einer Reihe von Waschbädern. Am Ende der Bäderstrecke befindet sich üblicherweise eine Kufe, die einen sekundären (d.h. einen auswaschbaren) Weichmacher enthält, insbesondere Glycerin. Den Abschluß der Produktionslinie bildet ein Trocknungsprozeß zum Entfernen von überschüssigem Wasser aus dem Gelschlauch. Der getrocknete Schlauch wird dann zweckmäßig zu Rollen aufgewickelt. Anschließend kann er konfektioniert werden, beispielsweise indem er zu Raupen gerafft oder zu einseitig verschlossenen Abschnitten verarbeitet wird.

Bei dem zweiten Verfahren wird durch das Einwirken spezieller Lösungsmittel oder Komplexbildner die Cellulose direkt in Lösung gebracht. Aufgrund seiner Aktualität für die Wursthüllenherstellung sei hier lediglich das NMMO-Verfahren benannt. Das Verfahren beruht auf der Löslichkeit von Cellulose in tertiären Aminoxiden wie z. B. N-Methyl-morpholin-N-oxid. Die Veredlungsschritte wurden bereits beim Viskoseverfahren beschrieben und können in ähnlicher Weise in das NMMO-Verfahren integriert werden.

Mit Hilfe der genannten Verfahren lassen sich Faser- bzw. Textilhüllen auf Cellulosebasis herstellen. Für die Erfindung ist die Art der Herstellung und der eingesetzten spinnbaren Cellulose- oder Cellulosederivatlösungen ohne Bedeutung. Die vollsynthetischen Flächengebilde können sowohl einfach (von innen oder von außen) wie auch beidseitig mit Viskose- oder Celluloselösung beschichtet werden. Die Konfektionierung der Hüllen im Anschluß an das jeweilige Verfahren kann einfaches Aufrollen, Schneiden in Abschnitte und Abbinden jeweils eines Endes der Abschnitte, oder Raffen der Rollenware zu Raupen beinhalten. Zudem kann die Rollenware bedruckt werden.

Die Eigenschaften der Hülle lassen sich modifizieren durch Additive, die der Viskose- oder Celluloselösung zudosiert werden, bevor diese auf die Faserverstärkung aufgebracht wird. Das sind beispielsweise anorganische oder organische Farbstoffe oder Farbpigmente, polymere Additive, beispielsweise Alginate, Polyvinylpyrrolidon, Copolymere aus N-Vinyl-pyrrolidon und Dimethylaminomethyl-methacrylat oder Copolymere aus N-Vinyl-pyrrolidon und Trimethyl-methacryloyloxyalkyl-ammonium-halogenid, -alkansulfonat oder -sulfat, Polyethylenoxide, Fette oder fettähnliche Substanzen, wie in der EP-A 0 638 241 beschrieben. Die genannten polymeren Additive wirken gleichzeitig als primäre (d.h. als permanent wirkende, weil nicht auswaschbare) Weichmacher. Der Anteil der polymeren Additive kann bis zu etwa 40 Gew.-% reichen, bezogen auf das Gewicht der Cellulose in der Beschichtungslösung, betragen.

In einer weiteren Ausführungsform werden viskosierte Textilgewebe- oder gewirke erst nach der Beschichtung mit Viskose- oder Celluloselösung und nachfolgender Regenerierung der Cellulose zu einem schlauchförmigen Gebilde geformt. Die Fixierung der Naht entlang der Längsseite erfolgt dann beispielsweise durch Kleben, vorzugsweise mit einem Polyurethankleber. Darüber hinaus kann die Längsnaht durch Nähen, Siegeln oder andere Fügeverfahren dauerhaft fixiert werden.

Weiterhin kann die erfindungsgemäße Nahrungsmittelhülle innen und/oder außen imprägniert oder beschichtet sein. Das kann beispielsweise eine durchgehende Beschichtung mit Barriereeigenschaften für Sauerstoff- und/oder Wasserdampf sein. Dafür geeignet ist insbesondere eine Beschichtung, die Polyvinylidenchlorid (PVDC) oder ein Vinylidenchlorid-Copolymer umfaßt (DE-A 197 42 719). Die Imprägnierung oder Beschichtung kann schließlich auch Flüssigrauch, andere Aromen, Proteine (die gegebenenfalls vernetzt sind), biocide Substanzen, anorganische oder organische Partikel, Harze auf Polyamidbasis, Öle oder Wachse oder ähnliche Additive umfassen.

Das Aufbringen der Imprägnierung oder Beschichtung auf die Außenseite kann inline per Walzenantrag, Besprühen oder Tauchen erfolgen. Bei textilen Flächengebilden, die nicht zum Schlauch geformt sind, können gegebenenfalls auch beide Seiten modifiziert werden. Die Ausrüstung der äußeren Hüllenoberfläche kann auch erst beim Konfektionieren erfolgen. Eine Imprägnierung oder Beschichtung der inneren Oberfläche der schlauchförmigen Hülle erfolgt zweckmäßig durch Benetzen der Oberfläche mit einer Lösung. Dies kann durch Befüllen des Gelschlauches oder der getrockneten Hülle mit einer entsprechenden Imprägnierungslösung geschehen. Die Imprägnierung der Innenseite kann auch durch eine Innendornbesprühung gleichzeitig mit dem Raffen der Nahrungsmittelhülle vorgenommen werden.

Mit den beschriebenen Mitteln läßt sich vor allem steuern, wie stark oder schwach die Hülle an dem Wurstbrät haftet. Eine genaue Einstellung der Haftung kann man auch über den Typ oder die Konzentration oder durch das Mischen verschiedener Haft- und Schälkomponenten erreichen (DE 609 129, DE 12 92 708). Eine besonders geringe Haftung zum Wurstbrät läßt sich mit Hilfe von sogenannten Schälkomponenten auf der inneren Hüllenoberfläche erreichen, die keine oder nur eine geringe Affinität zum Brät besitzen. Typische Beispiele sind Alkylketendimere, Chromfettsäurekomplexe, Öle und Wachse (EP-B 0 006 551). Zur Verbesserung der Haftung der Hülle am Wurstbrät können kationische Harze auf Polyamidoamin-Epichlorhydrin- oder Melamin-Formaldehyd-Basis und/oder Proteine, die mit Vernetzern, wie Glyoxal oder Glutardialdehyd behandelt wurden, dienen.

Bei hellen, insbesondere bei weißen Faserhüllen kommt es häufig zu einer Verfärbung der Hüllenoberfläche. Dieser Effekt läßt sich vermindern oder ganz vermeiden, wenn die Imprägnierung oder Beschichtung Gluconsäure-δ-lacton oder ähnlich wirkende Mittel enthält.

Die erfindungsgemäß hergestellten Nahrungsmittelhüllen eignen sich vor allem als künstliche Wursthülle, insbesondere für die Herstellung von Roh-, Koch- oder Brühwurst. Soweit die Hüllen ausreichend durchlässig sind, können die Würste bei Bedarf auch geräuchert werden. Die Hülle läßt sich auch bei der Herstellung von Käse verwenden.

Die nachfolgenden Beispiele dienen zur Illustration der Erfindung. Prozente sind darin Gewichtsprozente, soweit nicht anders angegeben oder aus dem Zusammenhang unmittelbar ersichtlich.

Unter der in Tabelle 4 genannten "Viskosedurchdringungzeit" soll die Zeit verstanden werden, die die Viskose zum Eindringen in die flächenförmige Faserverstärkung benötigt. Im Labor wurde diese Zeit folgendermaßen gemessen: Die flächenförmige Verstärkung wurde in einen Ring eingespannt. Auf die Verstärkung wurde Ammoniumsulfat gestreut und danach die eingespannte Verstärkung auf eine mit Viskose gefülltes Glas gesetzt. Die Viskose wurde so in das Glas gefüllt, daß die dem Ammoniumsulfat abgewandte Seite der Verstärkung mit Viskose vollständig benetzt wurde.

Der Zeitpunkt der vollständigen Durchdringung wurde durch die Entwicklung von Ammoniak (durch Einwirkung von Natronlauge aus der Viskose auf Ammoniumsulfat) angezeigt. Die Ammoniakbildung kann durch den Farbumschlag eines angefeuchteten pH-Papiers leicht nachgewiesen werden. Das pH-Papier wird hierzu im Abstand von 1 cm über das Ammoniumsulfatsalz gehalten. Die Zeit vom ersten Kontakt der flächigen Verstärkung mit Viskose bis zur ersten Verfärbung des pH-Papiers wurde bestimmt. Aus 10 Einzelmessungen wurde die Viskosedurchdringungszeit als Mittelwert angegeben. Die Messung erfolgte bei 23°C.

Die Viskosedurchdringungszeit hängt auch von der Viskosität der Viskose ab. Sie kann daher nur mit einer Viskose bestimmt werden, deren Viskosität genau definiert und konstant ist. Konkret verwendet wurde eine Viskoselösung, die 7,25 Gew.-% Cellulose enthielt, wobei die Cellulose als Cellulosexanthogenat vorlag, d.h. mit Schwefelkohlenstoff und NaOH derivatisiert war. Die Viskosität der Viskose betrug 223 Kugelfallsekunden (KFS) bei 25 °C und wurde folgendermaßen bestimmt:

Die Viskose wurde in ein Glasrohr mit einer definierten Strecke gefüllt. Mit einer Stopuhr wurde die Fallzeit einer genormten Stahlkugel innerhalb der definierten Strecke bestimmt. Als Ergebnis erhielt man die Viskosität in Kugelfallsekunden (KFS).

Zur Bestimmung der Viskosität wurde ein Bombenrohr aus Glas mit einer Meßstrecke von 150 mm und einem Gummiring als Halterung verwendet. Das Rohr besaß die Gesamt-Länge von 300 mm. Der Abstand des Randes der Einfüllöffnung bis zur obersten Eichringmarke betrug 100 mm und der Abstand des Rand der Einfüllöffnung bis zur untersten Eichringmarke 250 mm. Der Innendurchmesser des Rohres betrug 20 mm.

Für die Viskositätsmessung wurde eine Stahlkugeln der Klasse I nach DIN 5401, mit einem Durchmesser von 2,5 mm und einem Gewicht von 63,8 mg eingesetzt. Die Kugel wurde mit Aceton entfettet.

Ein Temperierbad aus Glas mit Einhängethermostat gewährleistete eine konstante Messtemperatur von 25 °C. Eine gelochte Kunststoffplatte diente als Halterung für das Bombenrohr in dem Temperierbad (Lochdurchmesser: 25 mm, Durchmesser der Kunststoffplatte: 320 mm). Mit einer Stoppuhr wurde die Kugelfallzeit entlang der Messstrecke gemessen.

Die Viskose wurde möglichst frei von Luftblasen bis mindestens 3 cm über die oberste Eichringmarke in das Bombenrohr eingefüllt. Anschließend wurde das Bombenrohr senkrecht in das Temperierbad eingehängt. Die Viskose wurde nun auf 25 °C temperiert (Temperierdauer: 20 bis 25 Minuten).

Zur Messung ließ man eine Stahlkugel in die Mitte der temperierten Viskose fallen und maß mit einer Stoppuhr die Fallzeit (in Sekunden) der Kugel innerhalb der definierten Meßstrecke von 150 mm. Sobald die untere Kugelperipherie die anvisierte obere Eichringmarke (als Strich erscheinenend) zu berühren schien, wurde mittels einer Stoppuhr der Anfang und ebenso an der untersten Eichringmarke das Ende der Fallzeit bestimmt.

Während der Meßdauer war darauf zu achten, daß das Bombenrohr senkrecht im Temperierbad einhing und die Kugel in der Mitte nach unten sank. Es wurde eine Einzelbestimmung durchgeführt und die Kugelfallzeit als "KFS" eingetragen.

Die erfindungsgemäßen Nahrungsmittelhüllen wurden im Vergleich zu einer mit einem herkömmlichen Faservlies aus cellulosischen Fasern verstärkten Nahrungsmittelhülle getestet. Die Haftung der Hülle am Brät wurde gemäß der Benotungsskala in Tabelle 1 beurteilt.

**Tabelle 1**

| Hafteigenschaften | Skala zur Benotung der Haftungseigenschaften der Hüllen | | | | | |
|---|---|---|---|---|---|---|
| | Keine Haftung | sehr schwache Haftung | schwache Haftung | mittelstar ke Haftung | starke Haftung | sehr starke Haftung |
| **Note** | 0 | 0,5 | 1 | 1,5-1,75 | 2,0-2,25 | 2,5 |

### Rohwurstherstellung

Verwendet wurde ein Brät aus 70 % Fleisch (aus der Schweineschulter) und 30 % Speck (Rückenspeck vom Schwein), die bei -30°C gelagert waren, sowie 24 g/kg Nitrit-Pökelsalz. Die Wasseraktivität (a_{w}-wert) betrug 0,98-0,99. Der pH-Wert betrug 6,0 (gemessen 24 h nach dem Schlachten). Die Bestandteile wurden bei -5 bis 0°C zerkleinert (pH-Wert bis 5,9; a_{w}-Wert 0,96 bis 0,97). Gefüllt wurde die Hülle bei einer Temperatur von -3 bis +1°C. Die Reifung erfolgte nach einer Angleichzeit von etwa 6 h bei einer Temperatur von 20 bis 25°C und einer relativen Luftfeuchte von weniger als 60 % in drei Abschnitten in einem dunklen Raum. Die Reifeabschnitten sind in Tabelle 2 dargestellt.

**Tabelle 2**

| **Übersicht zu den Reifeabschnitten bei der Rohwurstreifung** | | | | |
|---|---|---|---|---|
| Reifung | | 1. Abschnitt | 2. Abschnitt | 3. Abschnitt |
| Raum | Temperatur | 18 bis 25 °C | 18 bis 22 °C | um 15 °C |
| | rel. Luftfeuchte | 90 bis 92 % | 85 bis 90 % | 75 bis 80 % |
| | Luftgeschwindigkeit [m/sec] | 0,5 bis 0,8 | 0,2 bis 0,5 | 0,05 bis 0,1 |
| Produkt | pH-Wert | 5,2 bis 5,6 | 4,8 bis 5,2 | 5,0 bis 5,6 |
| | a_{w}-Wert | 0,94 bis 0,96 | 0,90 bis 0,94 | 0,85 bis 0,92 |
| | Reifezeit | 3 Tage | 7 Tage | 6 Wochen |

### Brühwurstherstellung/Kochwurstherstellung

Der mit einem Fleischwurstbrät gefüllte Darm wurde bei 75°C erhitzt. Die Erhitzungszeit (in Minuten) entsprach dem eingesetzten Kaliber der Wursthülle + 10 % Mehrzeit. Dies bedeutet beispielsweise für eine Wurst in einer Hülle vom Kaliber 45, daß sie (45 min + 4,5 min) lang gegart wurde.

In den folgenden Beispielen wurden Hüllen eingesetzt, bei deren Herstellung ein Faservlies oder ein Textilmaterial zu einem Schlauch geformt wurde, der dann einseitig oder beidseitig mit Viskose beschichtet wurde. Die Cellulose wurde mit verdünnter Schwefelsäure regeneriert. Anschließend wurde der Gelschlauch neutralisiert, mit einem Weichmacher versehen und getrocknet.

Die modifizierten Seiten der faserigen bzw. textilen Flächengebilde befanden sich bei den Beispielen auf der Innenseite der zum Schlauch geformten Nahrungsmittelhüllen. Aus den Ausgangrollen der faserigen und textilen Flächengebilden wurden Rollen mit einer Breite von 145 mm geschnitten, die sich für die Herstellung einer Wursthülle mit Kaliber 45 eigneten.

### Beispiel 1 (Vergleichsbeispiel)

### Faserhülle mit Faserverstärkung aus reinem Cellulosevlies

Als Vergleich zu den Hüllen mit vollsynthetischer Verstärkung diente eine Hülle mit einer Vliesverstärkung auf Cellulosebasis. Die Fasern in dem naßfesten Vlies bestanden zu 100 % aus Abakafasern (Cellulosefasern). Das naßfeste Vlies hatte ein Flächengewicht von 19 g/m². Die Naßfestigkeit des Vlieses wurde durch einen gängigen Harzbinder auf Polyamid-Polyamin-Epichlorhydrin-Basis erreicht, der zu 3 % im Vlies enthalten war. Nach dem Viskoseverfahren wurde damit eine faserverstärkte schlauchförmige Nahrungsmittelhülle auf Cellulosebasis mit einem Flächengewicht von ca. 78 g/m² gefertigt. Dabei wurde die Viskose allein auf die Außenseite des zu einem Schlauch geformten Vlieses aufgetragen.

### Beispiel 2

### Faserhülle mit vollsynthetischer Verstärkung

Ein naßfestes zweischichtiges Vlies mit einer Schicht aus Polypropylen-Endlosfasern und einer zweiten Schicht aus Bikomponenten-Endlosfasern (Polypropylen-Polyethylen; Seite-an-Seite-Konfiguration) wurde dadurch gewonnen, daß die Bikomponentenfilamente auf ein vorgebildetes schmelzgesponnenes Polypropylenvlies extrudiert wurden. Die Bikomponenten- und Polypropylenfilamente lagen im Mehrphasenvlies in einem Verhältnis 1:1 vor. Der Schmelzpunkt des Polyethylens lag bei etwa 125°C, der des Polypropylens bei 162°C. Das Vlies wurde nach den Extrusionsprozessen bei 145 °C mit einer "point bonded" Kalanderrolle behandelt um die Bindungseigenschaften zu verbessern. Das Vliesgewicht betrug insgesamt 19 g/m². Nach dem Viskoseverfahren wurde damit eine schlauchförmige Nahrungsmittelhülle auf Cellulosebasis mit einem Flächengewicht von 78 g/m² hergestellt. Die Viskose wurde dabei allein von außen auf das zum Schlauch geformte Vlies aufgetragen.

### Beispiel 3

Beispiel 2 wurde wiederholt, wobei diesmal jedoch das Vlies aus Beispiel 2 zusätzlich mit einer selbstvernetzenden Acrylatemulsion gemäß Tabelle 3 behandelt wurde, um seinen Benetzungseigenschaften zu verbessern. Der Auftrag erfolgte vor dem Kalandrieren des Vlieses. Insgesamt wurden 5 % an Acrylatbinder aufgetragen, bezogen auf das Trockengewicht des als Ausgangsmaterial verwendeten Vlieses. Nach dem Viskoseverfahren wurde damit dann eine schlauchförmige Nahrungsmittelhülle auf Cellulosebasis mit einem Flächengewicht von 82 g/m² hergestellt. Die Viskose wurde dabei allein von außen auf das zum Schlauch geformte Vlies aufgetragen.

**Tabelle 3**

| **Beschichtungsrezeptur für den Acrylatbinder** | |
|---|---|
| Komponenten | Gewichtsteile |
| Wasser | 65,74 |
| Octylphenol-polyethylenglykolether (®Triton X-114 von Rohm | 0,07 |
| and Haas) versetzt mit warmem Wasser | 0,21 |
| Acrylat-Emulsion (®Rhoplex NW-2744 F von Rohm and Haas) | 33,00 |
| Ammoniumnitrat (25 %) | 0,88 |
| Ammoniumhydroxid | bis pH 8,0-8,5 |
| Wacker Antischaumemulsion SE 2 (Drawin Vertriebs GmbH) | 0,10 |
| Total | 100,00 |

### Beispiel 4

Auf das Vlies aus Beispiel 3 wurde die Viskose von außen und von innen im Verhältnis 80:20 auf das zum Schlauch geformte Papier aufgetragen.

### Beispiel 5

Das Vlies aus Beispiel 2 wurde vor dem Kalandrieren durch die Einwirkung "scharfer" Wasserstrahlen ("Spunlacing") einer weiteren Verfestigung unterzogen. Anschließend wurde das Kalandrieren wie in Beipiel 2 durchgeführt. Nach dem Viskoseverfahren wurde eine schlauchförmige Nahrungsmittelhülle auf Cellulosebasis mit einem Flächengewicht von 78 g/m² hergestellt. Die Viskose wurde dabei von Außen auf das zum Schlauch geformte Vlies aufgetragen.

### Beispiel 6 (Vergleichsbeispiel)

### Gewebeverstärkte Hülle auf Cellulosebasis

Ein bahnförmiges Gewebe von 145 mm Breite bestehend aus 100 % Polyamid-6 mit einem Flächengewicht von 60 g/m² wurde für die Herstellung einer gewebeverstärkten schlauchförmigen Nahrungsmittelhülle auf Cellulosebasis verwendet. Hierbei kam das Viskoseverfahren zum Einsatz. Auf das zum Schlauch geformte Gewebe wurde eine Viskoselösung von außen angetragen, das Flächengewicht der fertigen Hülle betrug ca. 120 g/m².

### Beispiel 7 (Vergleichsbeispiel)

Auf das Gewebe aus Beispiel 6 wurde eine selbstvernetzende Acrylat-Emulsion gemäß Tabelle 3 aufgetragen. Die Beschichtung betrug 3 %, bezogen auf das Trockengewicht des reinen Polyamidgewebes. Auf das zum Schlauch geformte Gewebe wurde Viskoselösung von außen angetragen und die Cellulose aus der Viskose regeneriert. Das Flächengewicht der fertigen Hülle betrug 120 g/m².

### Beispiel 8 (Vergleichsbeispiel)

Ein bahnförmiges Gewebe von 145 mm Breite, bestehend aus 100 % Polyethylenfasern, mit einem Flächengewicht von 60 g/m² wurde für die Herstellung einer gewebeverstärkten schlauchförmigen Nahrungsmittelhülle auf Cellulosebasis verwendet. Hierbei kam das Viskoseverfahren zum Einsatz. Auf das zum Schlauch geformte Gewebe wurde eine Viskoselösung von außen angetragen. Das Flächengewicht der fertigen Hülle betrug 120 g/m².

### Beispiel 9

Auf eine gemäß Beispiel 2 hergestellte Nahrungsmittelhülle wurde vor der Trocknung des Gelschlauches mit Hilfe der Innenimprägnierungstechnik eine Haftimprägnierung aufgetragen. Hierzu wurde ein Polyamidoamin-Harz-Lösung verwendet, die unter der Bezeichnung ®Kenores XO von der Firma Akzo-Nobel kommerziell erhältlich ist. Die Auftragsmenge des Harzes auf der fertigen Hülle betrug ca. 300 mg/m².

### Beispiel 10

Auf eine gemäß Beispiel 2 hergestellte Nahrungsmittelhülle wurde vor der Trocknung des Gelschlauches mit Hilfe der Imprägnierungstechnik eine Schälimprägnierung auf der Innenseite aufgebracht. Hierzu wurde eine Chromfettsäurekomplex-Lösung verwendet. Die Chromfettsäurekomplex-Komponente ist als ®Montacell CF von der Firma H. Costenoble GmbH & Co. KG erhältlich. Die Auftragsmenge an Chromfettsäurekomplex betrug 0,250 mg/dm² der fertigen Nahrungsmittelhülle.

### Beispiel 11 (Vergleichsbeispiel)

Auf eine gemäß Beispiel 7 hergestellte Nahrungsmittelhülle wurde vor der Trocknung des Gelschlauches mit Hilfe der Innenimprägnierungstechnik eine Haftimprägnierung aufgetragen. Verwendet wurde eine Polyamidoamin-Harz-Lösung, die als ®Kenores XO der Firma Akzo Nobel erhältlich ist. Die Auftragsmenge des Harzes auf der fertigen Hülle betrug ca. 250 mg/m².

In Tabelle 4 sind die Viskosedurchdringungszeiten der Faserverstärkungen angeben. Die Viskosedurchdringungszeit ist bei allen Beispielen ähnlich wie im Vergleichsbeispiel 1 (Vliesstandard mit auf Cellulosebasis). Bei den Geweben aus reinem Polyamid oder aus einem rein synthetischen Vlies konnte die Viskosedurchdringungszeit mit Hilfe eines Hydrophilierungsmittels verbessert werden. Es ist dabei aber darauf zu achten, daß die Porosität von Gewebe, Gewirke oder Vlies durch den Binder nicht zu stark herabgesetzt wird und damit die Viskosedurchdringung verhindert wird.

**Tabelle 4**

| Beispiel | Viskosedurchdringung [s] | Beispiel | Viskosedurchdringung [s] |
|---|---|---|---|
| 1 | 25 | 5 | 32 |
| 2 | 30 | 6 | 35 |
| 3 | 27 | 7 | 32 |
| 4 | 27 | 8 | 39 |

In den Tabellen 5 und 6 sind die Schälnoten für die Haftung der Hülle gegenüber Salami und Fleischwurst angegeben. Hierbei wird deutlich, daß die Art des Vlieses keine negativen Auswirkung auf die Haftungseigenschaften der Hüllen besitzt. Mit Hilfe der Innenimprägnierung lassen sich die Schäleigenschaften der Hüllen exakt steuern.

**Tabelle 5**

| **Schälergebnisse bei Salami** | | | | | |
|---|---|---|---|---|---|
| **Beispiel** | Schälnoten nach | | **Beispiel** | Schälnoten | nach |
| | 10 Tagen | 6 Wochen | | 10 Tagen | 6 Wochen |
| **1** | 1,5 | 0,5 - 1 | **7** | 1 | 0-0,5 |
| **2** | 1 | 0-0,5 | **8** | 1 | 0-0,5 |
| **3** | 1 | 0-0,5 | **9** | 2,5 | 2,25 |
| **4** | 1 | 0-0,5 | **10** | 0 | 0 |
| **5** | 1 | 0 - 0,5 | **11** | 2,5 | 2,0 |
| **6** | 1 | 0-0,5 | | | |

**Tabelle 6**

| **Schälergebnisse bei Fleischwurst 1 Tag nach dem Brühen** | | | |
|---|---|---|---|
| **Beispiel** | | **Beispiel** | |
| **1** | 1,75 | **7** | 1,5 |
| **2** | 1,5 | **8** | 1,5 |
| **3** | 1,5 | **9** | 2,25 |
| **4** | 1,5 | **10** | 0-1 |
| **5** | 1,5 | **11** | 2,25 |
| **6** | 1,5 | | |

Die Hüllen mit rein synthetischer Verstärkung zeigen keinen Haftungseinfluß auf die Schälnoten im Gegensatz zur Hülle mit einer Faserverstärkung auf Cellulosebasis, die mit einem Polyamidoamin-Epichlorhydrin-Harzbinder ausgestattet sind. Diese wiesen selbst ohne Innenbeschichtung mit einer Haftkomponente eine mittelstarke Haftung nach 10 Tagen auf. Nach 6 Wochen ist die Schälnote beim Hüllenstandard immer noch mit der Note 0,5 bis 1 bewertet.

Bei Hüllen mit rein synthetischer Verstärkung wurde die Haftung ohne zusätzliche Innenimprägnierung nach 10 Tagen Salamireifung mit 1, nach 6 Wochen mit 0 bis 0,5 benotet. Dies bedeutet, daß bei einfach-viskosierten Hüllentypen häufig auf eine Schälimprägnierung sowie bei Pizzasalamianwendung, für die meist eine geringe Haftung zur Hülle gefordert ist, au eine zusätzliche Innenimprägnierung verzichtet werden kann.

## Patentansprüche

1. Nahrungsmittelhülle auf Basis von regenerierter Cellulose mit einer innenliegenden Faserverstärkung aus rein synthetischen Fasern, **dadurch gekennzeichnet, daß** die Faserverstärkung ein mehrschichtiges oder mehrphasiges Vlies oder ein Vlies aus Mehrkomponentenfasern ist.

2. Nahrungsmittelhülle gemäß Anspruch 1, **dadurch gekennzeichnet, daß** die synthetischen Fasern aus thermoplastischen Kunststoffen, bevorzugt Polyolefinen oder Copolymeren mit Olefin-Einheiten, Polyacrylaten, Copolymeren mit Acrylnitril-Einheiten, Polyestern oder Copolyestern und/oder aliphatischen oder (teil-)aromatischen Polyamiden oder Copolyamiden bestehen.

3. Nahrungsmittelhülle gemäß Anspruch 1 oder 2, **dadurch gekennzeichnet, daß** die Mehrkomponentent fasern Bikomponentenfasern sind.

4. Nahrungsmittelhülle gemäß einem oder mehreren der Ansprüche 1 bis 3, **dadurch gekennzeichnet, daß** das Vlies adhäsiv oder kohäsiv verfestigt ist.

5. Nahrungsmittelhülle gemäß einem der Ansprüche 1 bis 4, **dadurch gekennzeichnet, daß** die Oberfläche der Faserverstärkung zusätzlich modifiziert ist, bevorzugt durch Einwirkung von energiereicher Strahlung, besonders bevorzugt durch Behandlung mit Coronaentladung, Plasma oder Elektronenstrahlen.

6. Nahrungsmittelhülle gemäß einem der Ansprüche 1 bis 5, **dadurch gekennzeichnet, daß** die Faserverstärkung chemisch modifiziert ist, insbesondere mit mindestens einem Binder.

7. Nahrungsmittelhülle gemäß einem der Ansprüche 1 bis 6, **dadurch gekennzeichnet, daß** die Faserverstärkung ein Vlies ist mit einem Trockengewicht von 10 bis 50 g/m², bevorzugt von 15 bis 30 g/ m² .

8. Nahrungsmittelhülle gemäß einem der Ansprüche 1 bis 6, **dadurch gekennzeichnet, daß** die Faserverstärkung ein vlies ist mit einem Trockengewicht von von 17 bis 26 g/m².

9. Nahrungsmittelhülle gemäß einem der Ansprüche 1 bis 8, **dadurch gekennzeichnet, daß** die Faserverstärkung eine Vikosedurchdringungszeit von allgemein 5 bis 120 s, bevorzugt 10 bis 80 s, besonders bevorzugt 20 bis 40 s aufweist, bestimmt mit Viskose einer Viskosität von 223 Kugelfallsekunden bei 25 °C.

10. Nahrungsmittelhülle gemäß einem der Ansprüche 1 bis 9, **dadurch gekennzeichnet, daß** sie, vermischt mit der regenerierten Cellulose, anorganische oder organische Farbstoffe oder Farbpigmente, polymere Additive, bevorzugt Alginate, Copolymere aus N-Vinyl-pyrrolidon und Dimethylaminomethyl-methacrylat oder Copolymere aus N-Vinyl-pyrrolidon und Trimethyl-methacryloyloxyalkyl-ammonium-halogenid, -alkansulfonat oder -sulfat, Fette oder fettähnliche Substanzen, enthält.

11. Nahrungsmittelhülle gemäß einem der Ansprüche 1 bis 10, **dadurch gekennzeichnet, daß** sie innen und/oder außen imprägniert oder beschichtet ist.

12. Nahrungsmittelhülle gemäß Anspruch 11, **dadurch gekennzeichnet, daß** sie außen eine durchgehende Beschichtung mit Barriereeigenschaften für Sauerstoff- und/oder Wasserdampf aufweist, bevorzugt eine Beschichtung, die Polyvinylidenchlorid (PVDC) oder ein Vinylidenchlorid-Copolymer umfaßt.

13. Nahrungsmittelhülle gemäß einem der Ansprüche 1 bis 12, **dadurch gekennzeichnet, daß** sie mit Flüssigrauch, andere Aromen, biociden Substanzen, anorganische oder organische Partikel, Harze auf Polyamidbasis und/oder Ölen oder Wachsen imprägniert und/oder beschichtet ist.

14. Verfahren zur Herstellung einer Nahrungsmittelhülle gemäß einem der Ansprüche 1 bis 13, das die folgenden Schritte umfasst:
a) Bereitstellen einer Viskose-Spinnlösung;
b) Bereitstellen einer gegebenenfalls vorbehandelten Faserverstärkung aus rein synthetischen Fasern, wobei diese ein vlies gemäß des Kennzeichnenden Teils des Anspruchs 1 ist;
c) Formen der Faserverstärkung zu einem Schlauch mit überlappenden Längskanten; .
d) Beaufschlagen des Schlauches von außen, von innen oder von beiden Seiten mit Viskoselösung;
e) Regenerieren der Cellulose aus der Viskoselösung;
f) Waschen des in Schritt e) erhaltenen Cellulose-Gelschlauchs;
g) gegebenenfalls Behandeln der Gelschlauchs mit einem sekundären Weichmacher;
h) Trocknen der schlauchförmigen Hülle;
i) gegebenenfalls Konfektionieren der Hülle
oder alternativ:
a) Bereitstellen einer Cellulose-Spinnlösung mit einem Aminoxid als Lösemittel, bevorzugt einer Lösung von Cellulose in wasserhaltigem N-Methyl-morpholin-N-oxid;
b) Bereitstellen einer gegebenenfalls vorbehandelten Faserverstärkung aus vein synthetischen Fasern, wobei diese ein Vlies gemäß des kennzeichnenden Teils des Anspruchs 1 ist;
c) Formen der Faserverstärkung zu einem Schlauch mit überlappenden Längskanten;
d) Beaufschlagen des Schlauches von außen, von innen oder von beiden Seiten mit einer Celluloselösung;
e) Fällen der Cellulose;
f) Waschen des Cellulose-Gelschlauchs;
g) gegebenenfalls Behandeln der Cellulose-Gelschlauchs mit einem sekundären Weichmacher;
h) Trocknen der schlauchförmigen Hülle;
i) gegebenenfalls Konfektionieren der Hülle.

15. Verwendung der Nahrungsmittelhülle gemäß einem oder mehreren der Ansprüche 1 bis 13 als künstliche Wursthülle, insbesondere für die Herstellung von Roh-, Koch- oder Brühwurst oder Käse.

## Claims

1. A food casing based on regenerated cellulose with an internal fiber reinforcement made of purely synthetic fibers, wherein the fiber reinforcement is a multilayered or multiphase nonwoven web or a nonwoven web made of multicomponent fibers.

2. The food casing of claim 1, wherein the synthetic fibers are composed of thermoplastics, preferably polyolefins or copolymers with olefin units, polyacrylates, copolymers with acrylonitrile units, polyesters or copolyesters and/or aliphatic or (part-)aromatic polyamides or copolyamides.

3. The food casing of claim 1 or 2, wherein the multicomponent fibers are bicomponent fibers.

4. The food casing of one or more of claims 1 to 3, wherein the nonwoven web is adhesively or cohesively consolidated.

5. The food casing of one of claims 1 to 4, wherein the surface of the fiber reinforcement is additionally modified, preferably by exposure to high-energy radiation, more preferably by treatment with corona discharge, plasma or electron beams.

6. The food casing of one of claims 1 to 5, wherein the fiber reinforcement is chemically modified, in particular with at least one binder.

7. The food casing of one of claims 1 to 6, wherein the fiber reinforcement is a nonwoven web having a dry weight of 10 to 50 g/m², preferably of 15 to 30 g/m².

8. The food casing of one of claims 1 to 6, wherein the fiber reinforcement is a nonwoven web having a dry weight of 17 to 26 g/m².

9. The food casing of one of claims 1 to 8, wherein the fiber reinforcement has a viscose penetration time of generally 5 to 120 s, preferably 10 to 80 s, more preferably 20 to 40 s, determined using viscose with a falling-ball viscosity of 223 seconds at 25 °C.

10. The food casing of one of claims 1 to 9, which comprises, blended with the regenerated cellulose, organic or inorganic dyes or color pigments, polymeric additives, preferably alginates, copolymers of N-vinylpyrrolidone and dimethylaminomethyl methacrylate or copolymers of N-vinylpyrrolidone and trimethylmethacryloyloxyalkylammonium halide, trimethylmethacryloyloxyalkylammonium alkanesulfonate or trimethylmethacryloyloxyalkylammonium sulfate, fats or fatlike substances.

11. The food casing of one of claims 1 to 10, which is internally and/or externally impregnated or coated.

12. The food casing of claim 11, which externally has a continuous coating with barrier properties for oxygen and/or water vapor, preferably a coating which comprises polyvinylidene chloride (PVDC) or a vinylidene chloride copolymer.

13. The food casing of one of claims 1 to 12, which is coated and/or impregnated with liquid smoke, other flavors, biocides, organic or inorganic particles, polyamide-based resins and/or oils or waxes.

14. A process for producing a food casing of one of claims 1 to 13, which comprises the following steps:
a) providing a viscose spinning solution;
b) providing an unpretreated or pretreated fiber reinforcement made of purely synthetic fibers, said reinforcement being a nonwoven web according to the characterizing part of claim 1;
c) forming the fiber reinforcement to a tube with overlapping longitudinal edges;
d) applying viscose solution to the tube from the outside, from the inside or from both sides;
e) regenerating the cellulose from the viscose solution;
f) washing the cellulose gel tube obtained in step e);
g) if desired, treating the gel tube with a secondary plasticizer;
h) drying the tubular casing;
i) if desired, configuring the casing
or alternatively
a) providing a cellulose spinning solution with an amine oxide as solvent, preferably a solution of cellulose in hydrous N-methylmorpholine N-oxide;
b) providing an unpretreated or pretreated fiber reinforcement made of purely synthetic fibers, said reinforcement being a nonwoven web according to the characterizing part of claim 1;
c) forming the fiber reinforcement to a tube with overlapping longitudinal edges;
d) applying a cellulose solution to the tube from the outside, from the inside or from both sides;
e) precipitating the cellulose;
f) washing the cellulose gel tube;
g) if desired, treating the cellulose gel tube with a secondary plasticizer;
h) drying the tubular casing;
i) if desired, configuring the casing.

15. The use of the food casing of one or more of claims 1 to 13 as artificial sausage casing, particularly for producing raw-meat sausage, cooked-meat sausage or scalded-emulsion sausage or cheese.

## Revendications

1. Enveloppe alimentaire à base de cellulose régénérée comprenant un renforcement fibreux intérieur à base de fibres purement synthétiques, **caractérisée en ce que** le renforcement fibreux est une nappe multicouche ou multiphase ou une nappe constituée de fibres multicomposants.

2. Enveloppe alimentaire selon la revendication 1, **caractérisée en ce que** les fibres synthétiques sont constituées de matières plastiques thermoplastiques, de manière préférée de polyoléfines ou de copolymères ayant des unités oléfine, des polyacrylates, des copolymères ayant des unités acrylonitrile, des polyesters ou des copolyesters et/ou des polyamides ou copolyamides aliphatiques ou (partiellement) aromatiques.

3. Enveloppe alimentaire selon la revendication 1 ou 2, **caractérisée en ce que** les fibres multicomposants sont des fibres bicomposants.

4. Enveloppe alimentaire selon l'une quelconque des revendications 1 à 3, **caractérisée en ce que** la nappe est consolidée par un adhésif ou un cohésif.

5. Enveloppe alimentaire selon l'une quelconque des revendications 1 à 4, **caractérisée en ce que** la surface du renforcement fibreux est modifiée de manière supplémentaire, de manière préférée grâce à l'action d'un rayonnement à haute énergie, de manière particulièrement préférée grâce à un traitement par décharge Corona, plasma ou rayons électroniques.

6. Enveloppe alimentaire selon l'une quelconque des revendications 1 à 5, **caractérisée en ce que** le renforcement fibreux est modifié chimiquement, en particulier par au moins un liant.

7. Enveloppe alimentaire selon l'une quelconque des revendications 1 à 6, **caractérisée en ce que** le renforcement fibreux est une nappe ayant un poids à sec de 10 à 50 g/m², de manière préférée de 15 à 30 g/m².

8. Enveloppe alimentaire selon l'une quelconque des revendications 1 à 6, **caractérisée en ce que** le renforcement fibreux est une nappe ayant un poids à sec de 17 à 26 g/m².

9. Enveloppe alimentaire selon l'une quelconque des revendications 1 à 8, **caractérisée en ce que** le renforcement fibreux présente un temps de pénétration de viscose de généralement 5 à 120 secondes, de manière préférée de 10 à 80 secondes, de manière particulièrement préférée de 20 à 40 secondes, déterminé avec une viscose d'une viscosité de 223 secondes de chute de bille à 25°C.

10. Enveloppe alimentaire selon l'une quelconque des revendications 1 à 9, **caractérisée en ce qu'**elle contient, mélangés avec la cellulose régénérée, des colorants minéraux ou organiques ou des pigments, des additifs polymères, de manière préférée des alginates, des copolymères constitués de N-vinylpyrrolidone et de méthacrylate de diméthylaminométhyle ou des copolymères constitués de N-vinylpyrrolidone et d'halogénure de triméthylméthacryloyloxyalkylammonium, d'alcanesulfonate de triméthylméthacryloyloxyalkylammonium ou de sulfate de triméthylméthacryloyloxyalkylammonium, des matières grasses ou des substances similaires aux matières grasses.

11. Enveloppe alimentaire selon l'une quelconque des revendications 1 à 10, **caractérisée en ce qu'**elle est imprégnée ou enduite à l'intérieur et/ou à l'extérieur.

12. Enveloppe alimentaire selon la revendication 11, **caractérisée en ce qu'**elle présente à l'extérieur une enduction perméable ayant des propriétés de barrière pour l'oxygène et/ou la vapeur d'eau, de manière préférée une enduction qui comporte du chlorure de polyvinylidène (PVDC) ou un copolymère de chlorure de vinylidène.

13. Enveloppe alimentaire selon l'une quelconque des revendications 1 à 12, **caractérisée en ce qu'**elle est imprégnée et/ou enduite de fumée liquide, d'autres aromes, de substances biocides, de particules minérales ou organiques, de résines à base de polyamides et/ou d'huiles ou de cires.

14. Procédé de fabrication d'une enveloppe alimentaire selon l'une quelconque des revendications 1 à 13, qui comporte les étapes suivantes consistant à :
a) préparer une solution de filage de viscose ;
b) préparer un renforcement fibreux éventuellement prétraité constitué de fibres purement synthétiques, celui-ci étant une nappe conformément à la partie caractérisante de la revendication 1 ;
c) former le renforcement fibreux en un tube flexible ayant des bords longitudinaux se chevauchant ;
d) alimenter le tube flexible de l'extérieur, de l'intérieur ou des deux côtés avec une solution de viscose ;
e) régénérer la cellulose à partir de la solution de viscose ;
f) laver le tube flexible de gel de cellulose obtenu dans l'étape e) ;
g) traiter éventuellement le tube flexible de gel avec un assouplissant secondaire ;
h) sécher l'enveloppe tubulaire flexible ;
i) confectionner éventuellement l'enveloppe,
ou en variante :
a) préparer une solution de filage de cellulose comprenant un oxyde d'amine en tant que solvant, de manière préférée une solution de cellulose dans du N-oxyde de N-méthylmorpholine contenant de l'eau ;
b) préparer un renforcement fibreux éventuellement prétraité en fibres purement synthétiques, celui-ci étant une nappe conformément à la partie caractérisante de la revendication 1 ;
c) former le renforcement fibreux en un tube flexible ayant des bords longitudinaux se chevauchant ;
d) alimenter le tube souple de l'extérieur, de l'intérieur ou des deux côtés avec une solution de cellulose ;
e) précipiter la cellulose ;
f) laver le tube flexible de gel de cellulose ;
g) traiter éventuellement le tube flexible de gel de cellulose avec un assouplissant secondaire ;
h) sécher l'enveloppe tubulaire flexible ;
i) confectionner éventuellement l'enveloppe.

15. Utilisation de l'enveloppe alimentaire selon l'une quelconque des revendications 1 à 13 en tant qu'enveloppe artificielle de saucisson, en particulier pour la fabrication de saucisson, de saucisse à cuire ou de saucisse à bouillir ou de fromages.
